# EUROPEAN PATENT SPECIFICATION

(11) **EP 0 409 525 B1**
(45) Date of publication and mention of the grant of the patent: **07.09.1994**
(21) Application number: 90307744.4
(22) Date of filing: 16.07.1990
(51) Int. Cl.: B27N 3/24

(54) **Apparatus and method for making pressboard from poly-coated paper using relative movement of facing webs**
Apparat und Verfahren zum Herstellen von Pressplatten aus polymerbeschichtetem Papier mit Hilfe der Relativbewegung von gegenüberliegenden Bändern
Appareil et procédé pour fabriquer des panneaux comprimés à partir de papier revêtu de polymères, en utilisant le mouvement relatif des bandes opposées

(30) Priority: 21.07.1989 US 383208
(43) Date of publication of application: 23.01.1991
(73) Proprietor: FORTIFIBER CORPORATION, Los Angeles, California 90023-4777 (US)
(72) Inventor: Lamb, Vernon Leroy, Sparta, Michigan 49345 (US)
(74) Representative: Robinson, Anthony John Metcalf

(56) References cited:
- CH-A- 500 041
- FR-A- 2 555 506
- GB-A- 2 051 658
- US-A- 3 994 769
- US-A- 4 448 739

## Description

The present invention pertains to systems and methods for fabricating a pressboard product, and in particular, pressboard formed from a filler comprising primarily shredded paper coated with a thermoplastic material, with or without additional thermoplastic material.

Papers coated with a thermoplastic material (poly-coated papers) are utilized in a variety of applications. In one such application, kraft paper is coated with polyethylene to create roll headers utilized in the paper manufacturing industry. However, the use of poly-coated paper invariably generates waste or scrap, typically as a result of cutting the desired final product from blanks of sheet stock. For example, the poly-coated roll headers are round and therefore leave a relatively large offal portion when cut from rectangular sheet stock. The disposal of such material has proved to be difficult, time consuming and/or expensive. The polymer component largely prevents normal processing of the paper component since it causes plugging of drainage screens, among other things. The scrap paper and polymer may be treated as waste and hauled to a landfill or incinerator for proper disposal. However, landfill disposal is very expensive in terms of both hauling costs and landfill fees; and in many places incineration of such a product is prohibited.

Alternatively, the scrap paper may be recycled in the fabrication of a pressboard product. One such apparatus and process for producing pressboard from scrap poly-coated paper is described in US-A-3718536; however, this method includes a mere pressing of the board elements together. Further, this method involves only a batch processing of the scrap paper, and as such has an associated low output and high cost. Although that specification represents that the composite board can be manufactured continuously (column 5, lines 31-42) no operative apparatus is there set forth for a continuous implementation.

Another apparatus and process for producing pressboard from shredded poly-coated paper is described in our US-A-4810445. In this system, the pressboard is formed continuously by depositing shredded poly-coated paper onto a first web or sheet, heating the thermoplastic material to its softening point, placing a second web or sheet atop the poly-coated paper to thereby sandwich it between the two webs, and then utilizing pinch rolls to apply a pressing force to compress the elements together. One difficulty in this regard is that of obtaining optimum bonding within the shredded material and of the shredded material to the webs, for strength of product and ability to score.

It is an object of the present invention to improve the prior apparatus and method to obtain better bonding and hence a better product.

According to one aspect of the present invention, a method of fabricating pressboard from a filler comprising shredded paper coated with a thermoplastic material and a pair of webs comprising advancing first and second webs towards each other, placing between the webs a layer of filler comprising shredded, thermoplastic coated paper to form a composite, and pressing the composite and heating the composite to a temperature above the softening point of the thermoplastic, is characterised by shifting the webs relative to each other for enhancing bonding between the shredded paper and between the shredded paper and the webs.

According to a second aspect of the present invention, apparatus for continuously fabricating pressboard with a filler comprising shredded paper coated with a thermoplastic material and a pair of webs comprising web advancing means for advancing first and second webs toward each other; means for placing thermoplastic coated shredded paper between the webs to form a composite with the webs; and processing means for applying heat and pressure to said composite, is characterised by means for shifting the first and second webs relative to each other to bond said composite together.

The shifting of the webs relative to each other causes them to move relative to the heated coated shredded paper between them an this enhances the bonding between the shredded paper and between the shredded paper and the webs. This has been found to create a superior pressboard product having a stronger and more uniform bonding of the materials.

The invention therefore not only alleviates the disposal problem heretofore associated with the scrap, but also produces a superior article useful for more applications. The pressboard fabricated in accordance with the present invention can, if desired, be utilized for slip sheets, as packing separators, as a substitute for corrugated cardboard et al. The thickness of the final product can be controllably varied, e.g. .75 or 1.5 mm to 3.8 mm (30 or 60 point to 150 point) thickness, or higher.

Preferably the pressing and shifting operations are performed concurrently, a very satisfactory way of achieving this being to pass the composite along a serpentine path, for example about a plurality of rolls. Heating may also be effected simultaneously by the use of heating rolls.

Optionally, additional polymer can be incorporated into the shredded stock to form the composite filler and, if required, a reinforcing web can be introduced between the said pair of webs in addition to the filler.

The invention may be carried into practice in various ways but two forms of pressboard manufacturing apparatus and their method of use in manufacturing pressboard in accordance with the invention will now be described by way of example with reference to the accompanying drawings, in which:
Fig. 1 is an elevational view of one version of the pressboard manufacturing system of the present invention;
Fig. 2 is an enlarged view of the portion encircled by line II in Fig. 1; and
Fig. 3 is a schematic elevational view of another version of the invention.

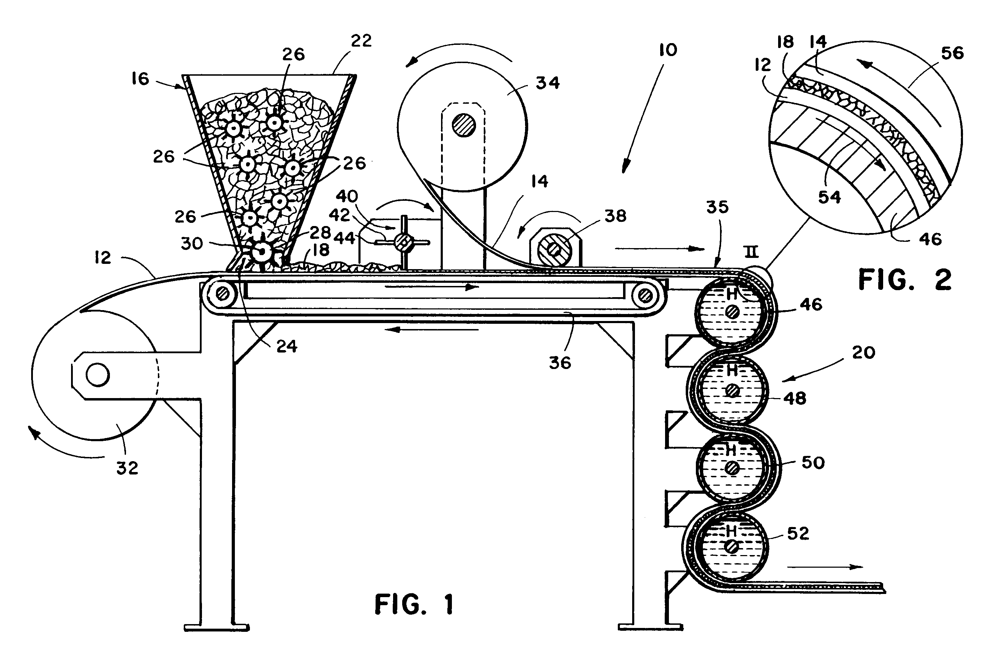

In the embodiment depicted in Fig. 1, a system 10 for fabricating a pressboard product from shredded paper coated with a thermoplastic material includes first and second facing webs 12 and 14, here shown as lower and upper webs, a hopper 16 depositing the shredded poly-coated paper 18 between webs 12, 14, and a series of heated vertically arranged pinch rolls 20 defining a serpentine path through which the pressboard materials pass.

In the initial phases of the operation, the poly-coated paper is shredded by being passed through a chopper (not shown) which cuts, grinds, mills or otherwise forms the waste paper into pieces which may be approximately 9.5 mm square (three-eighths inch square). Other sizes can be produced depending on the product to be manufactured. Preferably, to ensure smooth operation, the material should be reduced in size sufficiently to be readily flowable through hopper 16.

A typical poly-coated paper presently is a 42-pound kraft paper coated with polyethylene at a rate of approximately 23.5 gms/m² (14.4 pounds of polymer per basis (i.e. 3,000 square feet)). However, many other types and mixtures of paper and thermoplastics can be utilized, as well as variations in the amount of thermoplastic used. Other thermoplastics might include polymerized olefins (e.g. polyethylene, poly-propylene and polybutylene), polymerized vinyls (e.g. polyvinylchloride, polyvinylacetate and various vinyl polymers) and the like. These are examples. The material must be heated above the softening temperature of the particular thermoplastic material or mixture of materials present.

The poly-coated paper 18, once shredded, is loaded along with any supplemental polymeric materials added, into the hopper 16 as the filler. Hopper 16 has a large open end 22, into which the shredded material 18 from the chopper is received, and a restricted lower end 24 through which the filler 18 is fed continuously onto a travelling lower web 12. Rotatable agitators 26 are provided within hopper 12 to ensure that the shredded poly-coated paper 18 is continually loosened and separated to drop therethrough at a generally constant rate and prevent clogging and fouling of the operation. A rotatable dispensing roll 28 may be carried by feed shaft 30, driven by a conventional motor (not shown), to dispense the paper 18 at the uniform selected rate. Adjustment of this feed rate and of the feed rate of the webs enables the ultimate desired thickness of product to be produced. The agitators 26 and dispensing roll 28 normally extend the full width of webs 12, 14.

The webs 12, 14 are preferably uncoated 42-pound kraft in any selected width, e.g. 3m (ten feet). The thickness of the webs may be varied for the desired end product. Thinner webs can be employed than is normally possible with the specific process illustrated in prior US-A-4810445 because that process involved pulling a long section of web stock through the heating zone, whereas the rollers in the present system can be individually driven. The webs can be poly-coated, at least on the inward side facing the received shredded paper 18, to enhance adhesion of the facing webs to the shredded material. If the rolls have conventional release materials thereon, then the outer sides of the webs can be poly-coated. Alternatively, the webs could be of a material other than paper, e.g. polymeric film stock, or combinations of materials.

The facing webs 12, 14 are normally dispensed from a pair of rolls 32, 34, respectively, for travel along predetermined paths.

More specifically, in the embodiment depicted in Fig. 1, roll 32 is mounted upstream of hopper 16 so that a lower facing web 12 is passed beneath hopper 16 to receive from the hopper a steady feed of shredded poly-coated paper 18. Lower web 12 is fed at a constant rate along an underlying support conveyor 36, although other motive and/or support means could be used. To ensure that the filler formed primarily of poly-coated shredded paper 18 is generally uniformly spread over lower web 12, a levelling paddle 40 may be mounted directly downstream of hopper 16. Levelling paddle 40, shown to include multiple (here four) vanes 42, is rapidly rotated by a conventional motor (not shown), opposite the direction of movement of the webs, such that the free ends 44 of vanes 42 make sequential passes over the deposited paper 18 to smooth out high spots in the material.

Roll 34 is shown positioned downstream of hopper 16. From it an upper web 14 is fed downwardly to meet and overlie the other components and form a sandwich with the shredded poly-coated paper filler 18 and web 12. The shredded paper 18 is thus between webs 12, 14, thereby forming a multiple layer composite 35. A feeding roller 38 is provided to guidingly direct upper web 14 into smooth firm contact with shredded paper 18. The weight of this roll typically applies sufficient bias to cause interengagement of the layers.

Instead of the exemplary arrangement of the webs depicted with a lower web and an upper web moving generally horizontally, the webs could travel generally vertically, e.g. converging toward each other and toward shredded poly-coated paper deposited therebetween. Conceivably the shredded material could also be extruded between the webs.

After the facing webs 12, 14 and shredded paper 18 have been sandwiched together, they are passed to the series of pressure rolls 20 shown to define a serpentine path. Rolls 20 are preferably driven synchronously at the same rate by a conventional chain drive or other known means. These rolls may be converted from typical drying rolls of a paper mill, but positioned to press the web sandwich therebetween. The rolls are depicted generally in alignment with each other. However, they can be staggered to create a sharper angle of web travel. Rolls 20 are heated sufficiently to elevate the temperature of the web sandwich above the softening point of the particular thermoplastic used, to thereby effect bonding of the shredded poly-coated paper 18 together and to facing webs 12, 14. This heating may be effected in any desired manner, e.g. by propane firing of the rolls, by flowing hot oil through the rolls, electrically, with radiant heaters, or otherwise, such that convection, conduction and/or radiant heating techniques may be involved. The shredded paper stock and/or the webs may also be heated apart from the rolls.

Rolls 20 are usually heated to about 260°C (500°F), a temperature near but below the flash point of the paper webs (often about 282°C - 540°F), so that the composite 35 may be processed as quickly as possible. This is a temperature which is substantially higher than the softening temperature of most thermoplastics, and therefore acts to quickly soften the polymeric material. For example, the softening temperature for polyethylene is about 115.5°C (240° F). The roll temperature can be varied in accordance with the softening temperature of the polymer, the rate of processing feed, and the paper flash point temperature. The processing rate will vary with the use of different papers, different thermoplastics, and different thickness of product.

The series of rolls 20 is shown in Fig. 1 to include four rolls 46, 48, 50, 52 positioned in substantial alignment with one another to define a generally vertical serpentine path through which the pressboard materials 12, 14, 18 are passed. The number of rolls can be varied to suit the situation, as can the geometric path configuration, to achieve the desired differential linear movement forces between the webs. Directing composite 35 along the serpentine path functions to create the differential movement, i.e. move webs 12, 14 longitudinally back and forth relative to each other and to the shreds therebetween, so that in effect they rub and smear the softened polymer on the shredded poly-coated paper 18 therebetween. This action has been found to create a much stronger and more uniform bonding among the paper shreds 18 and of the shreds to facing webs 12, 14.

More specifically, as the facing webs 12, 14 are directed along the arcuate path defined by first roll 46, lower web 12 is positioned concentrically within upper web 14 (i.e. web 12 travels along a path with a smaller radius of curvature than does web 14) so that web 12 travels a lesser linear distance than does web 14 (Fig. 2). Since both webs 12, 14 travel at the same linear speed, a point on lower web 12 will travel around roll 46 more quickly than a point on upper web 14. This arrangement therefore causes the webs to shift linearly relative to each other (as indicated by arrows 54, 56 in Fig. 2) and smear the softened thermoplastic material therebetween.

As webs 12, 14 travel to the second roll 48, the orientations therefor are reversed; that is, the upper facing web 14 is then positioned concentrically within lower facing web 12. Consequently, a point on web 14 will pass around second roll 48 more quickly than a point on web 12 such that the webs 12, 14 are shifted relative to each other in the opposite direction than when passed about first roll 46. As can be readily appreciated, this reciprocal shifting and rubbing effectively smears and presses the thermoplastic material together and against facing webs 12, 14, ultimately producing a final pressboard having enhanced structural integrity. This back and forth linear shifting movement also tends to remove any high spots, i.e. uneven spots due to localized bunching of the shredded paper.

In one preferred embodiment, rolls 20 are arranged with a selected gap between the first several rolls, e.g. about a 2.29 mm (0.090 inch) gap between first and second rolls 46, 48, and a narrower gap, e.g. about a 1.52 mm (0.060 inch) gap between second and third rolls 48, 50, to progressively compact the materials together. The final (fourth) roll 52, rather than being set at a fixed spacing from the preceding (third) roll, preferably applies a uniform biasing force therebetween, e.g. of approximately 90mg per cm (500 pounds per lineal inch) against third roll 50, to ensure effective bonding. The biasing force may be applied by known means such as coil springs, fluid cylinders or the equivalent operative on the rolls.

Overall, the pressure or bias applied to the product can vary but should usually be at least about 90 Mg per cm (500 pounds per linear inch) to ensure effective bonding. The preferred range is 90 to 270 mg per cm (500 to 1500 pounds per linear inch). Above 270 mg (1500 pounds), kraft paper starts to break down, causing a different surface character and/or a different colour. Thus, if the webs are of kraft paper, the pressure should normally be kept below this amount.

The rolls may vary in size, i.e. may be about 225 mm (10 inches) in diameter or, in larger operations, typically 915 mm (36 inches) or 1067 mm (42 inches) in diameter. The web feed rate can vary greatly, e.g. about 1.1 m (3.5 feet) per minute on small scale equipment, or 30 m (100 feet) per minute or more on large installations.

After the processing by rolls 20 is completed, the pressboard is allowed to cool to effect solidification of the thermoplastic. While a specific cooling station may be utilized if desired, it is generally found to be unnecessary since a path of travel away from the rollers while exposed to ambient air is normally adequate.

Experimental runs have demonstrated that various thicknesses of product can be fabricated. Typically the range will be about 30 to 150 point in thickness (i.e. .76 to 3.8 mm - 0.030 to 0.150 inch).

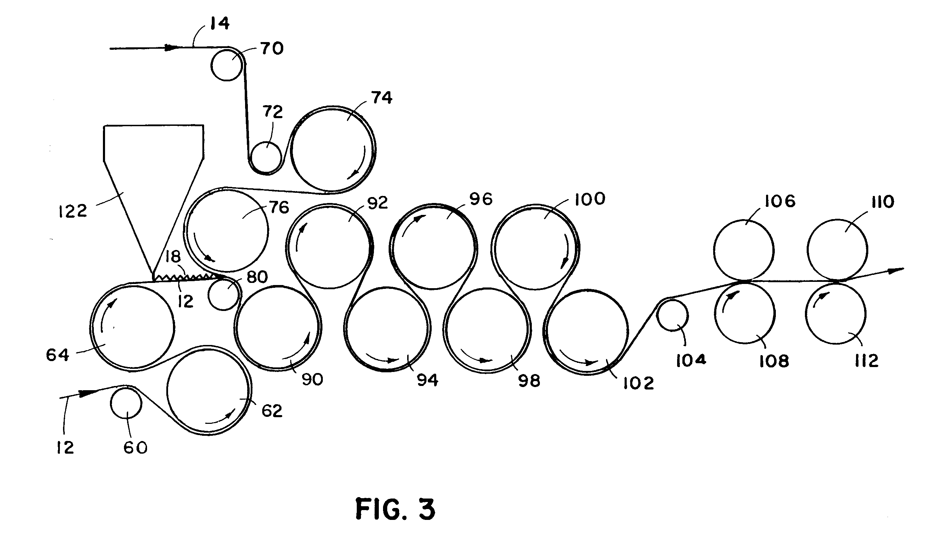

Referring now to Fig. 3, the second embodiment of the invention is there depicted in schematic form. In this embodiment, lower web 12 and upper web 14 are continuously supplied from a source (not shown) such as a roll, from which they are unwound, both being advanced at the same general linear velocity. Lower web 12 is shown travelling over an idler drum or roll 60 to a first preheat roll 62 and then to a second preheat roll 64, following which web 12 passes beneath a hopper 122 for deposit of the shredded polymer coated paper 18 thereon in a fashion comparable to that described relative to Fig. 1. A subsequent levelling device like that at 40 in Fig. 1 may be employed. Simultaneously, upper web 14 passes around a pair of idlers 70 and 72 to a first preheat roll 74 and from thence to a second preheat roll 76, after which it joins the first web 12 and the shredded paper layer thereon as the three pass through a nipping action around roll 80. The preheat drums or rolls 62, 64, 74 and 76 dry off moisture which might cause bonding problems in the composite product or could cause moisture blow as the composite material subsequently passes through the serpentine path on the subsequent rolls. Such preheating rolls furthermore cause air in the webs to expand and thereby degas the webs so that any blowing action resulting will not occur on the subsequent rolls. Such moisture blowing or air blowing actions, if occurring on the serpentine path rolls, would tend to disrupt the bonding or cause blowout of the shredded paper fill because one surface of the composite is adjacent the metal surface of the roll. Hence, all moisture and air being driven out would have to pass through the shredded paper and then either laterally or through the second web. Consequently, it is significant that the moisture be driven off and the webs degassed prior to the composite material entering the serpentine path.

In some instances, it may be desirable to supply additional polymer to the shreds to increase the polymer to paper ratio of the filler layer.

After the webs and filler are placed in sandwich form, they pass around a peripheral portion of lead-in roll 80 and are nipped between this roll and the first of a multiple, preferably seven as depicted, of heating and compression rolls 90, 92, 94, 96, 98, 100 and 102 in sequence. These are depicted as staggered, with four rolls being lower rolls and three being upper rolls. The web passes around a lower roll and then an upper roll, then a lower roll, etc. in sequence. The rolls have parallel axes of rotation. Each upper roll is positioned with its axis above and generally midway between the axes of two lower rolls. Each of the lower rolls, except the first one and the last one, has its axis generally midway between the axes of two upper rolls. The peripheral surface of each roll is adjacent to and cooperative with that of the next roll in sequence, and spaced there from a controlled small distance measured in hundredths of a millimetre (thousandths of an inch). The upper rolls are preferably mounted in slideways for limited vertical movement to achieve this controlled spacing. Controlled pressure between the upper rolls and the cooperative lower rolls upon the composite being formed is desired. This can be achieved by upwardly acting air cylinders on the upper rolls, to counteract a controlled portion of the downward bias of the weight of the upper rolls. Each of these rolls is heated as by hot oil, combustion gas, electrically or the like. The surface temperature of each roll should not be above around 290°C (550° F.) for protection against fire. The interior heat of the roll, e.g. if hot oil is used, can be up to around 315°C (600° F.) to obtain the desired exterior surface temperature. Preferably each roll has its own individual temperature control of conventional type. The temperature is above the softening point of the thermoplastic polymers which coat the shredded paper, and any polymers added to the shredded paper and/or the inner surface of the webs for optimum bonding.

The webs thus go through a series of linear shifting motions relative to each other and the shredded stock therebetween to cause a rubbing and smearing action on the softened polymer as the layers are slowly compacted together under the heat and pressure involved, for optimum bonding action.

Here again, the rolls are preferably individually driven to minimize pulling tension on portions of the webs and of the composite. The drive mechanism may be of any suitable type, rotating the rollers at a uniform peripheral speed. Thus, the webs are supported, heated and driven by the rolls, as well as effecting the linear shifting motion. As noted previously, this shifting action has a tendency to reduce high spots which are due to localized, uneven fill levels. Furthermore, they tend to iron the outer surface of the paper webs to effect an improved appearance for the product.

As the composite web stock disengages from the serpentine series of rolls, it is given a gentle nip by passing it through a large obtuse angle less than 180°. More specifically, the composite is guided around exit roll 104 on its way to the two pairs of nip rolls downstream thereof. The first pair of nip rolls, i.e. upper roll 106 and lower roll 108 have their peripheral surfaces closely adjacent each other, guiding the composite through an angle approaching but not equal to 180°, e.g. around 170-175°, so as to be 5-10° off. This causes a soft angle bending of about 5-10° in one direction. This is not so much as to disrupt the bond, but such that, when passed subsequently through a second pair of nip rolls 110 and 112 which likewise bend the composite a few degrees in the opposite direction, serves to prevent wrinkling of the resulting product. The product is then cooled to fully solidify the polymeric material or materials.

Suitable reinforcing stock can be incorporated into the product as by blending them between the shredded paper and one or both webs, or conceivably incorporating such into the middle of the shredded paper. This may be done by applying a first layer of shredded paper to the lower web, adding the reinforcing material, and then applying a second layer of shredded paper on top of the reinforcing material, followed by applying the upper web. Such reinforcing materials can be a webbing of glass fibre, prepolyester, fibrilated high density polyethylene terephthalate, metallic fibres, scrim, or other suitable substances or layers.

The above description is that of exemplary and preferred embodiments of the invention and it will be appreciated that various alterations and changes can be made without departing from the invention as claimed.

## Claims

1. A method of fabricating pressboard from a filler comprising shredded paper coated with a thermoplastic material and a pair of webs comprising advancing first and second webs (12,14) towards each other, placing between the webs a layer of filler (18) comprising shredded, thermoplastic coated paper to form a composite, and pressing the composite and heating the composite to a temperature above the softening point of the thermoplastic, characterised by shifting the webs relative to each other for enhancing bonding between the shredded paper and between the shredded paper and the webs.

2. A method according to claim 1 in which the shifting of the webs includes reciprocal shifting in the longitudinal direction of the webs.

3. A method according to claim 1 or claim 1 in which the shifting of the webs comprises passing the composite along a serpentine path.

4. A method according to claim 1 or claim 2 or claim 3 in which said pressing and shifting operations are performed concurrently.

5. A method according to claim 1 or claim 2 or claim 3 in which the shifting of the webs comprises shifting the webs alternately in one direction and then in the opposite direction by passage about a plurality of rolls (46-52;90-102).

6. A method according to claim 5 in which the heating of said composite comprises or includes heating the plurality of rolls (46-52).

7. A method according to any of claims 1 to 6 which includes incorporating additional thermoplastic polymer in the filler.

8. A method according to any of claims 1 to 7 in which the heating of the composite includes heating the thermoplastic material above its softening point, and the pressing comprises applying a pressure of between about 90 and about 270 kg per cm (500 to 1500 pounds per lineal inch) to said composite.

9. A method according to any of claims 1 to 8 which includes a levelling (40) of the shredded coated paper to a substantially uniform thickness after the depositing of the shredded coated paper onto the first web and before the placing of the second web thereon.

10. A method according to any of claims 1 to 9 which comprises depositing the shredded coated paper onto the first web (12) and placing the second web (14) onto the shredded coated paper, such that the composite is formed with the shredded coated paper (18) positioned between the first and second webs prior to the heating, pressing and shifting.

11. Apparatus for continuously fabricating pressboard with a filler (18) comprising shredded paper coated with a thermoplastic material and a pair of webs (12, 14) comprising web advancing means (32,34,36,38;60-64,70-76) for advancing first and second webs toward each other; means (16,26,28;122) for placing thermoplastic coated shredded paper between the webs to form a composite with the webs; and processing means (46-52;90-102) for applying heat and pressure to said composite, characterised by means (46-52;90-102) for shifting the first and second webs relative to each other to bond said composite together.

12. Apparatus according to claim 11 in which the processing means includes a plurality of heated rolls (46-52;90-102) defining a serpentine path through which the composite is passed.

13. Apparatus according to claim 12 in which the plurality of rolls includes first and second rolls (46,48) defining a first gap through which the composite passes, means (48,50) for defining a second gap narrower than said first gap and through which the composite passes, and subsequent roll means (50,52) defining a passage through which the composite passes, and which applies a preselected pressure against the composite when the composite is passed therebetween.

14. Apparatus according to any of claims 11 to 13 which includes a levelling means (40) positioned between the depositing means (16) and the applying means (46-52) for levelling the shredded coated paper to a substantially uniform thickness.

15. Apparatus according to any of claims 11 to 14 in which the processing means includes a plurality of heated rolls (46-52;90-102) defining a serpentine path through which the composite is passed.

16. Apparatus according to any of claims 11 to 15 which includes heated, preheat roll means (62,64,74,76) defining a pair of paths to the serpentine path rolls (90-102) for preheating the webs to drive off moisture and gases.

## Patentansprüche

1. Verfahren zum Herstellen von Preßplatten aus einem Füllstoff, umfassend zerfasertes, mit einem Thermoplastmaterial beschichtetes Papier, und ein Paar Bänder, umfassend das Vorschieben des ersten und des zweiten Bandes (12, 14) zueinander, das Plazieren einer Lage Füllstoff (18), umfassend zerfasertes, thermoplastbeschichtetes Papier, zwischen die Bänder, um einen Verbundstoff zu bilden, und das Pressen des Verbundstoffes sowie das Erwärmen des Verbundstoffes auf eine Temperatur über dem Erweichungspunkt des Thermoplasten, gekennzeichnet durch das Verschieben der Bänder in bezug zueinander, um den Verbund zwischen dem zerfaserten Papier sowie zwischen dem zerfaserten Papier und den Bändern zu verstärken.

2. Verfahren nach Anspruch 1, bei welchem das Verschieben der Bänder reziprokes Verschieben in der Längsrichtung der Bänder umfaßt.

3. Verfahren nach Anspruch 1 oder Anspruch 2, bei welchem das Verschieben der Bänder das Führen des Verbundstoffes entlang eines schlangenförmigen Weges umfaßt.

4. Verfahren nach Anspruch 1 oder Anspruch 2 oder Anspruch 3, bei welchem der Preß- und der Verschiebevorgang gleichzeitig durchgeführt werden.

5. Verfahren nach Anspruch 1 oder Anspruch 2 oder Anspruch 3, bei welchem das Verschieben der Bänder ein durch Vorbeiführen um eine Vielzahl von Walzen (46-52; 90-102) abwechselnd in eine Richtung und dann in die entgegengesetzte Richtung erfolgendes Verschieben der Bänder umfaßt.

6. Verfahren nach Anspruch 5, bei welchem das Erwärmen des Verbundstoffes das Erwärmen der Vielzahl von Walzen (46-52) umfaßt oder miteinschließt.

7. Verfahren nach einem der Ansprüche 1 bis 6, welches das Einbinden zusätzlichen Thermoplastpolymers in den Füllstoff umfaßt.

8. Verfahren nach einem der Ansprüche 1 bis 7, bei welchem das Erwärmen des Verbundstoffes das Erwärmen des Thermoplastmaterials über seinen Erweichungspunkt umfaßt, und das Pressen das Beaufschlagen des Verbundstoffes mit einem Druck von ungefähr 90 bis ungefähr 270 kg/cm (500 bis 1500 Pfund/Laufzoll) umfaßt.

9. Verfahren nach einem der Ansprüche 1 bis 8, welches ein Nivellieren (40) des zerfaserten, beschichteten Papiers auf eine im wesentlichen einheitliche Dicke umfaßt, nachdem das zerfaserte, beschichtete Papier auf das erste Band abgelegt und noch bevor das zweite Band darauf plaziert wird.

10. Verfahren nach einem der Ansprüche 1 bis 9, welches das Ablegen des zerfaserten, beschichteten Papiers auf dem ersten Band (12) und das Plazieren des zweiten Bandes (14) auf dem zerfaserten, beschichteten Papier umfaßt, derart, daß der Verbundstoff mit dem zerfaserten, beschichteten Papier (18) gebildet wird, welches vor dem Erwärmen, Pressen und Verschieben zwischen dem ersten und dem zweiten Band angeordnet wird.

11. Vorrichtung zum kontinuierlichen Herstellen von Preßplatten mit einem Füllstoff (18), umfassend zerfasertes, mit einem Thermoplastmaterial beschichtetes Papier, und ein Paar Bänder (12, 14), umfassend Bandvorschubmittel (32, 34, 36, 38; 60-64, 70-76) zum Vorschieben des ersten und des zweiten Bandes zueinander; Mittel (16, 26, 28; 122) zum Plazieren von thermoplastbeschichtetem, zerfaserten Papier zwischen die Bänder, um einen Verbundstoff mit den Bändern zu bilden; und Verarbeitungsmittel (46-52; 90-102) zum Beaufschlagen des Verbundstoffes mit Wärme und Druck, gekennzeichnet durch Mittel (46-52; 90-102) zum Verschieben des ersten und des zweiten Bandes in bezug zueinander, um den Verbundstoff miteinander zu verbinden.

12. Vorrichtung nach Anspruch 11, bei welcher das Verarbeitungsmittel eine Vielzahl von beheizten Walzen (46-52; 90-102) umfaßt, welche einen schlangenförmigen Weg definieren, durch welchen der Verbundstoff hindurchgeführt wird.

13. Vorrichtung nach Anspruch 11, bei welcher die Vielzahl von Walzen erste und zweite Walzen (46, 48), welche einen ersten Spalt begrenzen, durch welchen der Verbundstoff hindurchtritt, Mittel (48,50) zum Begrenzen eines zweiten Spalts, welcher enger als der erste Spalt ist und durch welchen der Verbundstoff hindurchtritt, und nachfolgende Walzenmittel (50, 52) aufweist, welche einen Durchgang begrenzen, durch welchen der Verbundstoff hindurchtritt und welcher den Verbundstoff mit einem vorgegebenen Druck beaufschlagt, wenn der Verbundstoff dazwischen hindurchgeführt wird.

14. Vorrichtung nach einem der Ansprüche 11 bis 13, welche ein Nivelliermittel (40) aufweist, welches zwischen dem Aufgebemittel (16) und den Beaufschlagemitteln (46-52) zum Nivellieren des zerfaserten, beschichteten Papiers auf eine im wesentlichen einheitliche Dicke angeordnet ist.

15. Vorrichtung nach einem der Ansprüche 11 bis 14, bei welcher das Verarbeitungsmittel eine Vielzahl beheizter Walzen (46-52; 90-102) umfaßt, welche einen schlangenförmigen Weg definieren, durch welchen der Verbundstoff hindurchgeführt wird.

16. Vorrichtung nach einem der Ansprüche 11 bis 15, welche zum Vorwärmen der Bänder, um Feuchtigkeit und Gase davon zu entfernen, beheizte Vorwärmwalzenmittel (62, 64, 74, 76) umfaßt, welche ein Wegepaar zu den Walzen des schlangenförmigen Weges (90-102) definieren.

## Revendications

1. Procédé de fabrication de carton comprimé à partir d'une matière de remplissage constituée par du papier déchiqueté revêtu d'une matière thermoplastique et de deux bandes comprenant l'avancement de la première bande et de la deuxième (12, 14), l'une vers l'autre, la mise en place entre les bandes d'une couche de matière de remplissage (18) constituée par du papier déchiqueté recouvert de matière thermoplastique pour constituer un matériau composite, et le pressage du matériau composite et le chauffage du matériau composite jusqu'à une température supérieure au point de ramollissement de la matière thermoplastique, caractérisé par le déplacement des bandes l'une par rapport à l'autre pour améliorer la liaison dans le papier déchiqueté et entre le papier déchiqueté et les bandes.

2. Procédé suivant la revendication 1, dans lequel le déplacement des bandes l'une par rapport à l'autre comprend un mouvement de va-et-vient dans la direction longitudinale des bandes.

3. Procédé suivant la revendication 1 ou 2, dans lequel le déplacement des bandes l'une par rapport à l'autre comporte le passage du matériau composite sur un parcours ondulé.

4. Procédé suivant la revendication 1, 2 ou 3, dans lequel les opérations de pressage et de déplacement des bandes l'une par rapport à l'autre sont exécutées en même temps.

5. Procédé suivant la revendication 1, 2 ou 3, dans lequel le déplacement des bandes l'une par rapport à l'autre comporte leur mouvement alternativement dans un sens, puis dans le sens opposé, en les faisant passer sur une pluralité de tambours (46 à 52; 90 à 102).

6. Procédé suivant la revendication 5, dans lequel le chauffage du produit composite consiste dans ou inclut le chauffage de la pluralité des tambours (46 à 52).

7. Procédé suivant l'une quelconque des revendications 1 à 6, qui comprend l'incorporation de polymère thermoplastique supplémentaire à la matière de remplissage.

8. Procédé suivant l'une quelconque des revendications 1 à 7, dans lequel le chauffage du matériau composite inclut le chauffage de la matière thermoplastique au-dessus du point de ramollissement et le pressage comporte l'application à ce matériau composite d'une pression comprise entre environ 90 et environ 270 kg par cm (500 à 1500 livres par pouce linéaire).

9. Procédé suivant l'une quelconque des revendications 1 à 8, qui comprend l'aplanissement (40) du papier déchiqueté revêtu pour l'amener à une épaisseur sensiblement uniforme après le dépôt du papier déchiqueté revêtu sur la première bande et avant la mise en place de la deuxième bande par-dessus.

10. Procédé suivant l'une quelconque des revendications 1 à 9, qui comprend le dépôt du papier déchiqueté revêtu sur la première bande (12) et la mise en place de la deuxième bande (14) sur ledit papier déchiqueté, de sorte que le matériau composite est formé avec le papier déchiqueté revêtu (18) placé entre les première et deuxième bandes avant le chauffage, le pressage et le déplacement.

11. Appareil de fabrication en continu de carton comprimé avec une matière de remplissage (18) constitué par du papier déchiqueté revêtu d'une matière thermoplastique et deux bandes (12, 14), comprenant des moyens d'avancement des bandes (32, 34, 36, 38; 60 à 64, 70 à 76) servant à faire avancer les première et deuxième bandes l'une vers l'autre, des moyens (16, 26, 28; 122) servant à placer le papier déchiqueté revêtu de matière thermoplastique entre les bandes pour former un matériau composite avec ces bandes, et des moyens de traitement (46 à 52; 90 à 102) servant à appliquer de la chaleur et une pression à ce matériau composite, caractérisé en ce qu'il comprend des moyens (46 à 52; 90 à 102) servant à déplacer les première et deuxième bandes l'une par rapport à l'autre pour lier ensemble les éléments constitutifs du matériau composite.

12. Appareil suivant la revendication 11, dans lequel les moyens de traitement comprennent une pluralité de tambours chauffés (46 à 52; 90 à 102) qui définit un parcours ondulé par lequel on fait passer le matériau composite.

13. Appareil suivant la revendication 12, dans lequel la pluralité de tambours comprend un premier tambour et un deuxième tambour (46, 48) qui donnent un premier interstice dans lequel passe le matériau composite, des moyens (48, 50) pour définir un deuxième interstice plus étroit que le premier et dans lequel passe le matériau composite, et des tambours placés à la suite (50, 52), qui définissent un passage par lequel passe le matériau composite et qui appliquent une pression fixée d'avance à ce matériau composite quand il passe entre ces tambours.

14. Appreil suivant l'une quelconque des revendications 11 à 13, qui comprend un moyen d'aplanissement (40) placé entre le moyen (16) servant à déposer la matière de remplissage et les moyens d'application (46 à 52), pour aplanir le papier déchiqueté revêtu afin de lui donner une épaisseur sensiblement uniforme.

15. Appareil suivant l'une quelconque des revendications 11 à 14, dans lequel les moyens de traitement comprennent une pluralité de tambours chauffés (46 à 52; 90 à 102) qui définit un parcours ondulé par lequel on fait passer le matériau composite.

16. Appareil suivant l'une quelconque des revendications 11 à 15, qui comprend des tambours de préchauffage chauffés (62, 64, 74, 76) qui définissent deux parcours allant aux tambours du parcours ondulé (90 à 102) afin de préchauffer les bandes pour chasser l'humidité et les gaz.
